# EUROPEAN PATENT APPLICATION

(11) **EP 4 794 070 A1**
(43) Date of publication of application: **19.08.2026**
(21) Application number: 26158114.4
(22) Date of filing: 12.02.2026
(51) Int. Cl.: H01M 50/107, H01M 50/536, H01M 50/538, H01M 50/586, H01M 10/04, H01M 10/0525

(54) **SECONDARY BATTERY, BATTERY PACK AND ELECTRONIC DEVICE**

(30) Priority: 17.02.2025 CN 202520251451 U
(71) Applicant: AESC Japan Ltd., Yokohama-shi, Kanagawa 220-0012 (JP)
(72) Inventor: ZHAO, Shimeng, Jiangyin City, Wuxi City (CN)
(74) Representative: Becker, Eberhard

(57) **Abstract**

Disclosed are a secondary battery (100), a battery pack (1002), and an electronic device (1000). The secondary battery (100) includes: a housing (200), including an end wall (111) and a side wall (109) surrounding the end wall (111), the end wall (111) having an opening portion (111V); an electrode assembly (120), including positive and negative electrode sheets (10, 20) and a separator (122); an electrode terminal (160), passing through the opening portion (111V) and fixed on the end wall (111); and a current collecting plate (202), disposed between the electrode assembly (120) and the end wall (111) and electrically connecting the electrode assembly (120) and the electrode terminal (160). Along a radial direction of the electrode assembly (120), the electrode assembly (120) includes a first region (Ra) and a second region (Rb). A minimum distance between a surface of the current collecting plate (202) facing the electrode assembly (120) and a first end (16u) of a negative electrode active material layer (16) along a first direction (D1) is L_{A} mm, L_{A} mm ≥1.5 mm.

## Description

### BACKGROUND

### Technical Field

The present disclosure relates to the field of battery technology, and more specifically, relates to a secondary battery, a battery pack and an electronic device.

### Description of Related Art

In the field of new-energy power batteries, applications of secondary batteries have become increasingly common. For example, secondary batteries (such as lithium-ion batteries) may be applied in vehicles, energy storage, mobile phones, tablet computers, wearable devices, portable power supplies, electronic cigarettes, digital products, power tools, power units, energy storage apparatuses, and other electronic devices. One type of secondary battery is a columnar cell, which includes a housing and an electrode assembly. The electrode assembly includes a positive electrode sheet, a first separator, a negative electrode sheet, and a second separator, which are sequentially stacked and then wound to form the electrode assembly, and is subsequently sealed within the housing. However, there remains a need for further improvement in the safety performance of existing secondary batteries.

### SUMMARY

In view of the problems existing in the related art, a purpose of the present disclosure is to provide a secondary battery, a battery pack, and an electronic device, which are at least capable of improving the safety performance of the battery during use.

To achieve the above purpose, an embodiment of the present disclosure provides a secondary battery. The secondary battery includes: a housing, including an end wall and a side wall surrounding the end wall, the end wall has an opening portion; an electrode assembly, accommodated inside the housing, including a negative electrode sheet, a positive electrode sheet and a separator provided between the negative electrode sheet and the positive electrode sheet, wherein, the negative electrode sheet includes a negative electrode current collector and a negative electrode active material layer coated on a part of a surface of the negative electrode current collector, the negative electrode current collector includes a negative electrode coated region covered by the negative electrode active material layer and a negative electrode uncoated region not covered by the negative electrode active material layer, a direction from the negative electrode uncoated region to the negative electrode coated region is a preset direction; an electrode terminal, passing through the opening portion and fixed on the end wall, and insulated from the end wall; and a current collecting plate, provided between the electrode assembly and the end wall, and electrically connecting the electrode assembly and the electrode terminal. Along a radial direction of the electrode assembly, the electrode assembly includes a first region away from a center hole of the electrode assembly and a second region close to the center hole, the negative electrode active material layer has a first end along the preset direction. Within a projection range of the first region along the preset direction, a surface of the current collecting plate faces the electrode assembly, and a minimum distance between the surface of the current collecting plate and the first end along the preset direction is L_{A} mm, L_{A} mm ≥ 1.5 mm.

In some embodiments, 6 mm ≥ L_{A} mm ≥ 1.5 mm; a maximum height of the secondary battery is H mm, a value range of H/L_{A} is 13-100.

In some embodiments, within a projection range of the second region along the preset direction, a minimum distance between the surface of the current collecting plate and the first end along the preset direction is L_{B} mm, 6 mm ≥ L_{B} mm ≥ 1.34 mm.

In some embodiments, along the radial direction of the electrode assembly, the electrode assembly further includes a third region. The third region is closer to the center hole compared to the second region. Within a projection range of the third region along the preset direction, a minimum distance between the surface of the current collecting plate and the first end along the preset direction is L_{C} mm, 6 mm ≥ L_{C} mm ≥ 1.1 mm.

In some embodiments, the positive electrode sheet includes a positive electrode current collector and a positive electrode active material layer. The positive electrode current collector includes a positive electrode coated region covered by the positive electrode active material layer, and a positive electrode uncoated region not covered by the positive electrode active material layer, a direction from the positive electrode coated region to the positive electrode uncoated region is the preset direction. Along the preset direction, the positive electrode uncoated region includes a positive electrode tab, and a positive electrode connection region connected between the positive electrode tab and the positive electrode coated region. The electrode assembly further includes an insulating layer. The insulating layer covers the positive electrode connection region. A value range of a width of the insulating layer in the preset direction is 1.9 mm to 2.7 mm.

In some embodiments, the width of the insulating layer in the preset direction is greater than 2 mm.

In some embodiments, the insulating layer includes a first end in the preset direction. A distance that the first end of the negative electrode active material layer exceeds the first end of the insulating layer in the preset direction is greater than 0.9 mm.

In some embodiments, a side of the electrode terminal facing away from the electrode assembly has a hole recessed toward the electrode assembly. The secondary battery further includes a sealing nail, and the sealing nail seals a blind hole.

In some embodiments, the secondary battery further includes a cover plate. The cover plate seals the opening portion to encapsulate the electrode assembly inside the housing. The hole is provided as a blind hole. The cover plate is provided with an injection hole passing through the cover plate. A bottom surface of the blind hole has a weld mark formed by welding the electrode terminal and the current collecting plate.

An embodiment of the present disclosure further provides a battery pack, which includes the above-mentioned secondary battery.

An embodiment of the present disclosure further provides an electronic device, which includes the above-mentioned battery pack.

Because the first region of the electrode assembly is close to a side surface of the housing, and the side surface of the housing has a high probability of being compressed. The technical solution of the present disclosure, by setting a lower limit of the minimum distance L_{A} mm between the positive electrode current collecting plate corresponding to the first region and the first end of the negative electrode active material layer to 1.5 mm, makes it possible to avoid battery failure caused by the housing being compressed, and improves the safety performance of the battery during use.

### BRIEF DESCRIPTION OF THE DRAWINGS

In order to more clearly illustrate the technical solutions in the embodiments of the present disclosure or the related art, the following will briefly introduce the drawings required to be used in the description of the embodiments or the related art. Clearly, the drawings in the following description are some embodiments of the present disclosure. For those of ordinary skill in the art, other drawings may also be obtained according to these drawings without creative effort.
FIG. 1 shows a schematic diagram when an electronic device of an embodiment of the present disclosure is a vehicle.
FIG. 2 shows a perspective view of a secondary battery according to an embodiment of the present disclosure.
FIG. 3 shows a cross-sectional perspective view of a secondary battery according to an embodiment of the present disclosure.
FIG. 4 shows a cross-sectional view of an electrode assembly according to some embodiments.
FIG. 5 shows a cross-sectional schematic diagram of a positive electrode sheet at a region A1 in FIG. 4.
FIG. 6 shows a partial schematic diagram of a dimensional configuration of a secondary battery at a positive electrode side according to some embodiments.
FIG. 7 shows an enlarged cross-sectional schematic diagram of a portion of an electrode assembly.

### DESCRIPTION OF THE EMBODIMENTS

For a better understanding of the spirit of the embodiments of the present disclosure, the following further illustrates them in conjunction with some preferred embodiments of the present disclosure.

The embodiments of the present disclosure will be described in detail below. Throughout the specification of the present disclosure, the same or similar components and components having the same or similar functions are denoted by similar reference numerals. The embodiments described herein with respect to the accompanying drawings are illustrative and graphical in nature and are provided to provide a basic understanding of the present disclosure. The embodiments of the present disclosure should not be construed as limitations on the present disclosure.

As used herein, the terms "approximately", "substantially", "essentially" and "about" are provided to describe and illustrate small variations. When used in conjunction with an event or circumstance, the terms may refer to instances in which the event or circumstance occurs precisely as well as instances in which the event or circumstance occurs in close approximation.

In this specification, unless otherwise specified or limited, relative terms such as: "central", "longitudinal", "lateral", "front", "rear", "right", "left", "internal", "external", "lower", "higher", "horizontal", "vertical", "above", "below", "upper", "lower", "top", "bottom" and their derivative terms (such as "horizontally", "downwardly", "upwardly", etc.) should be interpreted as referring to the direction as described in the discussion or as described in the accompanying drawings. These relative terms are only provided for convenience of description and do not require the present disclosure to be constructed or operated in a particular direction.

For convenience of description, "first", "second", "third", etc. may be used herein to distinguish different components of a figure or a series of figures. "First", "second", "third", etc. are not intended to describe corresponding components. In addition, the embodiments and features in the embodiments of the present disclosure may be combined with each other without conflict. The present disclosure will be described in detail below with reference to the accompanying drawings and in conjunction with the embodiments.

Secondary batteries (such as large columnar battery products like 4680, 4695, 46120, etc.) need to undergo shoulder dynamic compression test to simulate and test the safety performance of the battery when compressed. For example, a vehicle is equipped with a battery, and the battery may sometimes be compressed during use. The shoulder dynamic compression test typically uses a blunt head to compress at a displacement of 4 mm at a shoulder edge position on the positive electrode side of the battery at a pressure of, for example, 500 N and a speed of 1m/s. The shoulder dynamic compression test requires no fire, smoke, or explosion. However, under the current design parameters concerning the distance, on a side of the positive electrode current collecting plate, from a lower end face of an electrode assembly to an edge of an active material layer of a negative electrode sheet, and a width of an insulating layer of a positive electrode sheet, ignition and/or short-circuit events may occur on a probabilistic basis during the shoulder dynamic compression test. For example, some test results evidence ignition in 2 out of 6 trials and internal short circuit in 3 out of 6 trials, which does not satisfy customer requirements. This indicates that, under the existing secondary battery design, the battery is prone to ignition and/or internal short circuit when subjected to compression during use. Accordingly, the pass rate of the shoulder dynamic compression test requires improvement so as to enhance the in-service safety performance of the battery.

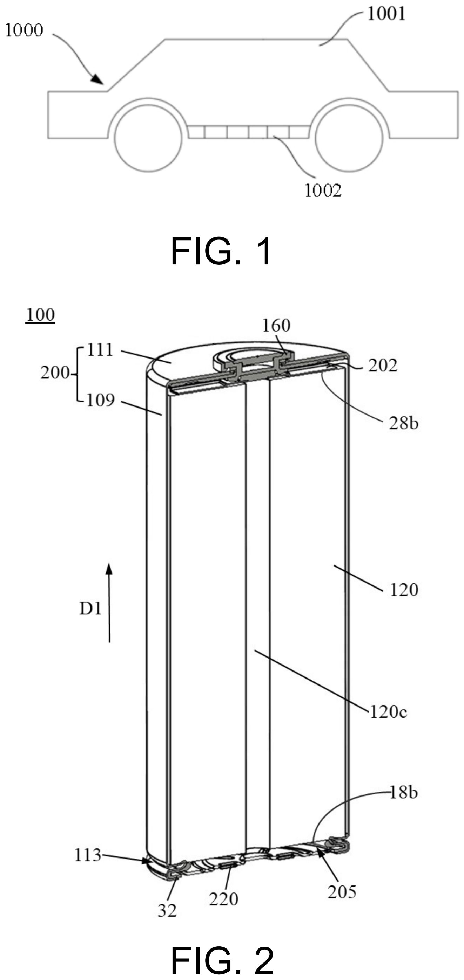

The present disclosure provides an electronic device 1000. In the following embodiments, for convenience of description, the electronic device 1000 being a vehicle is taken as an example for description. Referring to FIG. 1, a battery pack 1002 is provided inside the vehicle, and the battery pack 1002 may be provided at the bottom or head or tail of the vehicle body 1001. The battery pack 1002 may be provided for power supply of the vehicle. For example, the battery pack 1002 may serve as an operating power source of the vehicle. An operation part of the electronic device 1000 is electrically connected with the battery pack 1002 to obtain electrical energy support. The vehicle may be a fuel vehicle, a gas vehicle, or a new energy vehicle. The new energy vehicle may be a pure electric vehicle, a hybrid vehicle, or an extended-range vehicle, etc., but is not limited thereto. The operation part is the vehicle body, and the battery pack 1002 is disposed at the bottom of the vehicle body and provides electrical energy support for the operation of the vehicle or the operation of electrical components in the vehicle. However, in some other embodiments, the electronic device 1000 may also be a mobile phone, a portable device, a laptop computer, a ship, a spacecraft, an electric toy, an electric tool, etc. The spacecraft include airplanes, rockets, space shuttles, and spaceships, etc. The operation part may be a unit component that obtains the electrical energy of the battery pack 1002 and make corresponding operation, such as a fan blade rotation unit of a fan, a dust collection operation unit of a vacuum cleaner, etc. The electric toys include fixed or mobile electric toys, such as game consoles, electric car toys, electric ship toys, and electric airplane toys, etc. The electric tools include metal cutting electric tools, grinding electric tools, assembly electric tools, and railway electric tools, such as electric drills, electric grinders, electric wrenches, electric screwdrivers, electric hammers, impact drills, concrete vibrators, and electric planers, etc. The embodiments of the present disclosure do not impose special limitations on the above electronic device 1000.

The battery pack 1002 may include a plurality of secondary batteries (such as the secondary battery 100 in FIG. 2) and a housing for accommodating the plurality of secondary batteries. In the following description, a columnar battery is taken as an example of the secondary battery for description. FIG. 2 shows a cross-sectional perspective view of the secondary battery 100 according to the embodiments of the present disclosure.

Referring to FIG. 2, the secondary battery 100 may be a columnar battery. The secondary battery 100 may include an electrode assembly 120, an electrolyte, a housing 200, and a cover plate 220. The housing 200 includes a peripheral wall 109 and an end wall 111 connected to one end of the peripheral wall 109. An opening 205 is disposed at the other end of the peripheral wall 109 opposite to the end wall 111, and the cover plate 220 covers the opening 205. The cover plate 220 may be provided to encapsulate the electrode assembly 120 and the electrolyte together with the housing 200. The material of the housing 200 may be any of a variety of available materials, such as copper, iron, aluminum, steel, aluminum alloy, etc. The housing 200 may be in a columnar shape and defines an accommodating cavity, and the electrode assembly 120 is disposed in the accommodating cavity. An outer diameter of the housing 200 may be determined according to a specific diameter size of the electrode assembly 120. For example, the outer diameter of the housing 200 may be, for example, 18 mm, 21 mm, 46 mm, etc. In some embodiments, the secondary battery 100 may be a 4680 columnar battery (outer diameter 46 mm, height 80 mm), or the secondary battery 100 may be a 4695 columnar battery (outer diameter 46 mm, height 95 mm), or the secondary battery 100 may be a 46120 columnar battery (outer diameter 46 mm, height 120 mm).

The electrode assembly 120 may be mainly formed by sequentially stacking and winding a positive electrode sheet, a negative electrode sheet, and a separator located between the positive electrode sheet and the negative electrode sheet (described in detail below). The wound electrode assembly 120 may have a center hole 120c. In some embodiments, the positive electrode sheet may include a positive electrode current collector and a positive electrode active material layer, and the positive electrode active material layer is coated on a part of a surface of the positive electrode current collector. A positive electrode uncoated region 28b of the positive electrode current collector that is not covered by a positive electrode coated region may be provided to form a positive electrode tab. The negative electrode sheet may include a negative electrode current collector and a negative electrode active material layer, and the negative electrode active material layer is coated on a part of a surface of the negative electrode current collector. A negative electrode uncoated region 18b of the negative electrode current collector that is not covered by a negative coated region may be provided to form a negative electrode tab.

A crimp portion 113 (also referred to as a roll groove) protruding inward is formed at the peripheral wall of the housing 200 adjacent to the opening 205. The electrode assembly 120 is provided between the end wall 111 and the crimp portion 113, and the crimp portion 113 is capable of restricting the movement of the electrode assembly 120 in a height direction (parallel to a first direction D1) between the end wall 111 and the crimp portion 113 and in an opposite direction thereof. An end portion of the peripheral wall 109 of the housing 200 on the opening 205 side may be configured as a crimped edge portion 32, and the crimped edge portion 32 extends inward along a radial direction of the housing 200. The crimped edge portion 32 and the crimp portion 113 are spaced apart along the height direction, and the crimp portion 113 and the crimped edge portion 32 may jointly clamp the cover plate 220. The cover plate 220 is electrically insulated from the housing 200.

The negative electrode uncoated region 18b of the electrode assembly 120 faces the opening 205, and may be electrically connected to the housing 200 through a negative electrode current collecting plate located between the cover plate 220 and the electrode assembly 120, so that the housing 200 is negatively charged. The negative electrode current collecting plate may be welded to the housing 200 by laser welding. Specifically, a welding position where the negative electrode current collecting plate and the housing 200 are welded is located on a side of the crimp portion 113 facing the electrode assembly 120.

The columnar battery 100 may also include an electrode terminal 160, and the electrode terminal 160 passes through the end wall 111 and is insulated from the end wall 111. A positive electrode current collecting plate 202 is provided between the electrode assembly 120 and the end wall 111. The positive electrode current collecting plate 202 may electrically connect the electrode terminal 160 and the electrode assembly 120, for example, connect to the positive electrode uncoated region 28b of the positive electrode sheet, so that the electrode terminal 160 is positively charged. In some embodiments, the electrode terminal 160 may be welded to the positive electrode current collecting plate 202 by laser penetration welding.

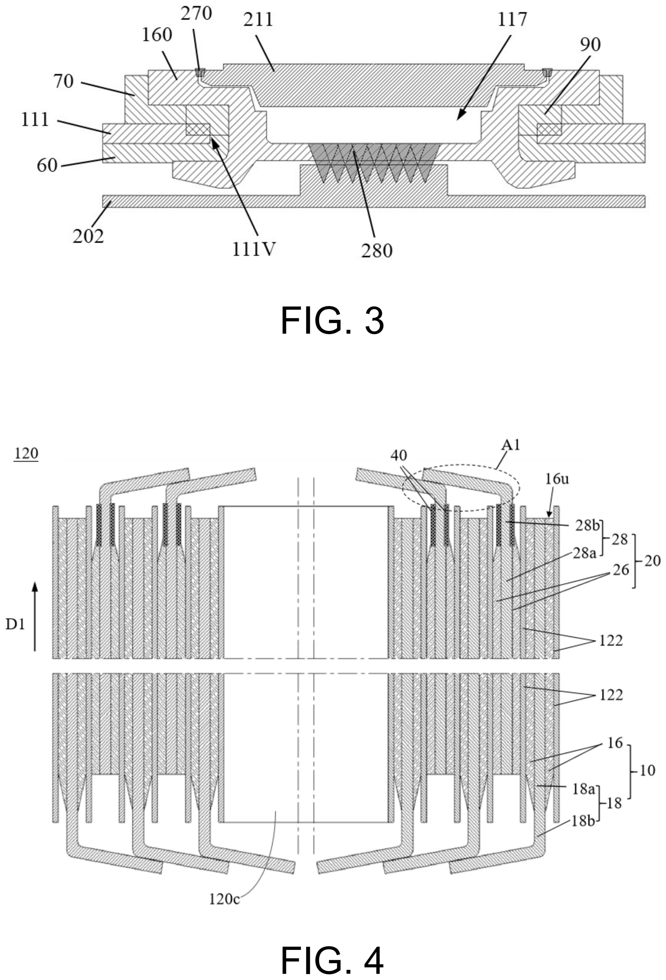

FIG. 3 is a partial enlarged schematic diagram of the electrode terminal 160 in FIG. 2. Referring to FIG. 3, the end wall 111 has an opening portion 111V. The electrode terminal 160 passes through the opening portion 111V and is fixed on the end wall 111. In this embodiment, the electrode terminal 160 and the end wall 111 are fixed by riveting. A side of the electrode terminal 160 facing away from the electrode assembly has a hole 117 recessed toward the electrode assembly 120. A sealing nail 211 seals the hole 117. An outer surface edge of the sealing nail 211 may be welded to the side wall of the hole 117, thereby forming a weld mark 270.

In some embodiments, the hole 117 may be a through hole, and in such embodiments, the hole 117 may be provided for injecting the electrolyte. In the embodiment shown in FIG. 3, the hole 117 is a blind hole. A bottom surface of the hole 117 has a weld mark 280 formed by welding the electrode terminal 160 and the positive electrode current collecting plate 202. The weld mark 280 may extend from the electrode terminal 160 below the hole 117 into the positive electrode current collecting plate 202. In embodiments where the hole 117 is a blind hole, an injection hole passing through the cover plate 220 and provided for injecting the electrolyte may be disposed in the cover plate 220, so as to inject the electrolyte through the cover plate 220 on a side of the negative electrode.

The electrode terminal 160 is insulated and isolated from the end wall 111 through a lower plastic 60 and an upper plastic 70 respectively, and the opening portion 111V is sealed through a sealing member 90. The electrode terminal 160 may be combined with the end wall 111 of the housing by riveting. The upper plastic 70 is clamped between an outer flange of the electrode terminal 160 and the end wall 111, and the lower plastic 60 is clamped between an inner flange of the electrode terminal 160 and the end wall 111. The upper plastic 70, the lower plastic 60, and the sealing member 90 may respectively have an annular shape surrounding the electrode terminal 160.

In an example of the columnar battery 100 of the present disclosure, a manufacturing method of the columnar battery 100 of the present disclosure includes the following steps:
Winding: A wound structure is formed by stacking and winding the negative electrode sheet, the separator, and the positive electrode sheet, wherein the negative electrode uncoated region 18b of the negative electrode sheet and the positive electrode uncoated region 28b of the positive electrode sheet are used as the positive electrode tab and the negative electrode tab, and the positive electrode uncoated region 28b and the negative electrode uncoated region 18b are bent along a radial direction of the electrode assembly 120.
Welding of current collecting plate and electrode assembly: The positive electrode current collecting plate 202 and the negative electrode current collecting plate are respectively welded to surface regions of the bent positive electrode uncoated region 28b and the negative electrode uncoated region 18b.
Insertion into housing: The electrode assembly 120 welded with the negative electrode current collecting plate and the positive electrode current collecting plate 202 is inserted into the housing 200 from the opening 205, wherein the manner of inserting the electrode assembly 120 in this step is not limited, for example, the electrode assembly 120 may be inserted manually or by a manipulator.
Installing the electrode terminal 160.
Injecting the electrolyte: The manner of injecting the electrolyte is not limited, and the electrolyte may be injected through the opening 205. In this embodiment, the electrolyte is injected through the opening 205, which reduces the process of forming a liquid injection hole on the end wall 111, and the existing opening 205 may be directly provided for injection, thereby simplifying the process and reducing the cost.
Sealing: The cover plate 220 seals the opening 205, and various sealing techniques may be employed, without limitation thereto. In some embodiments, an outer periphery of the housing 200 is first roll-pressed to form the crimp portion 113 recessed toward the center of the housing 200, so as to restrict movement of the electrode assembly 120 in the height direction; thereafter, a mechanical sealing process is carried out to perform an upsetting-seal operation on the cover plate 220 to form a crimped edge portion 32, thereby setting the cover plate 220 to seal the opening 205 of the housing 200. This step utilizes a well-established process that is low in cost and highly efficient.

FIG. 4 shows a cross-sectional view of the electrode assembly 120 according to some embodiments. Referring to FIG. 4, the electrode assembly 120 is mainly formed by winding the negative electrode sheet 10 and the positive electrode sheet 20, and the separator 122 is provided between the negative electrode sheet 10 and the positive electrode sheet 20. The electrolyte may be filled between the negative electrode sheet 10, the positive electrode sheet 20 and the separator 122.

The negative electrode sheet 10 may include the negative electrode current collector 18 and a negative electrode active material layer 16, and a part of a surface of an opposite surface of the negative electrode current collector 18 along its thickness direction is covered by the negative electrode active material layer 16. As a result, the negative electrode current collector 18 includes the negative coated region 18a covered by the negative electrode active material layer 16, and the negative electrode uncoated region 18b not covered by the negative electrode active material layer 16. The positive electrode sheet 20 includes the positive electrode current collector 28 and the positive electrode active material layer 26, and at least a part of a surface of an opposite surface of the positive electrode current collector 28 along its thickness direction is covered by the positive electrode active material layer 26. As a result, the positive electrode current collector 28 includes the positive electrode coated region 28a covered by the positive electrode active material layer 26, and the positive electrode uncoated region 28b not covered by the positive electrode active material layer 26. A direction from the positive electrode coated region 28a to the positive electrode uncoated region 28b is a first direction D1. Moreover, a direction from the negative electrode uncoated region 18b to the negative coated region 18a is also the first direction D1. The first direction D1 may be referred to as a preset direction, and the first direction D1 is parallel to the height direction of the secondary battery 100. The negative electrode uncoated region 18b of the negative electrode current collector 18 may be provided to form the negative electrode tab. The positive electrode uncoated region 28b of the positive electrode current collector 28 may be provided to form the positive electrode tab.

Taking a lithium-ion battery as an example, the material of the negative electrode current collector 18 may be, for example, copper, and the negative electrode current collector 18 is a copper foil. The negative electrode active material of the negative electrode active material layer 16 may be carbon or silicon, etc. The material of the positive electrode current collector 28 may be, for example, aluminum, and the positive electrode active material of the positive electrode active material layer 26 may be lithium cobalt oxide, lithium iron phosphate, ternary lithium or lithium manganese oxide, etc. The material of the separator 122 may be PP (polypropylene) or PE (polyethylene), etc.

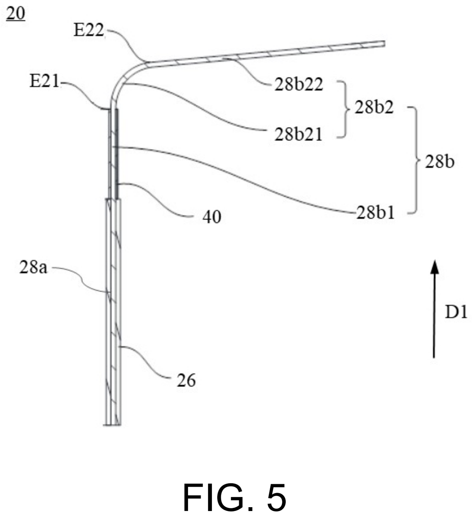

FIG. 5 shows a schematic cross-sectional view of the positive electrode sheet 20 at a region A1 in FIG. 4. Referring to FIG. 5, the positive electrode uncoated region 28b includes a positive electrode tab 28b2, and a positive connection region 28b1 connected between the positive electrode tab 28b2 and the positive electrode coated region 28a. The positive electrode tab 28b2 may specifically include a positive electrode tab body 28b22, and a positive electrode tab transition portion 28b21 connected between the positive connection region 28b1 and the positive electrode tab body 28b22.

The positive electrode tab transition portion 28b21 includes a first positive electrode tab transition endpoint E21 connected to the positive connection region 28b1, and the first positive electrode tab transition endpoint E21 is a position where a tangent line of the positive electrode tab transition portion 28b21 intersects with an extending direction of the positive connection region 28b1. The positive electrode tab transition portion 28b21 also includes a second positive electrode tab transition endpoint E22, and the second positive electrode tab transition endpoint E22 is a position where the tangent line of the positive electrode tab transition portion 28b21 intersects with an extending direction of the positive electrode tab body 28b22. The insulating layer 40 covers the positive connection region 28b1. Setting the insulating layer 40 may minimize the possibility of contact between the negative electrode sheet 10 and the positive electrode sheet 20. The insulating layer 40 may be disposed on both side surfaces of the positive electrode uncoated region 28b. The insulating layer 40 may effectively prevent electrical contact between the negative electrode sheet 10 and the positive electrode sheet 20.

In some embodiments, the main composition of the insulating layer 40 is: boehmite and PVDF (polyvinylidene difluoride). A proportion of boehmite is 80%; a proportion of PVDF is 20%. In some embodiments, the insulating layer is a ceramic material layer. A thickness of the insulating layer 40 is 1.5 mm-2.5 mm, for example, may be 1.5 mm, 1.7 mm, 2 mm, 2.1 mm, 2.3 mm or 2.5 mm, etc. By setting a thickness range of the insulating layer 40, it is possible to avoid that a coating thickness of the insulating layer 40 is too thin, resulting in difficulty in obtaining the required electrical insulation and support strength. In the meantime, it is possible to avoid that the thickness of the insulating layer 40 is too thick, resulting in the possibility of increased curing time of a coating layer and increased thickness of the overall structure.

In some embodiments, the insulating layer 40 includes a color developing agent, which is provided to distinguish whether a side coated with the insulating layer 40 is a front side or a back side of the positive electrode sheet 20 by a color developing effect of the color developing agent, including but not limited to distinguishing a surface density of the front and back sides of the positive electrode sheet 20, etc. The main component of the color developing agent may be bismuth vanadate, and the color thereof is yellow.

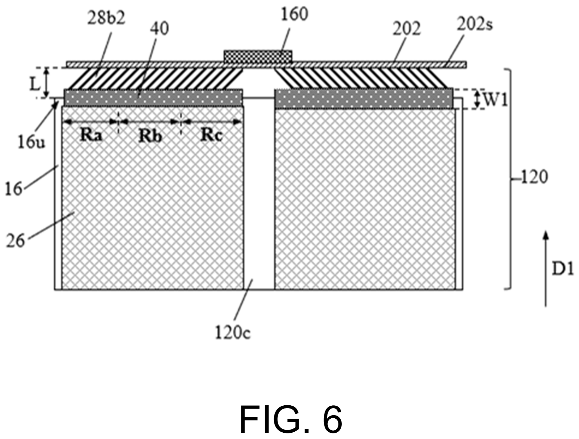

FIG. 6 shows a partial schematic diagram of a dimensional configuration of a secondary battery on the positive electrode side according to some embodiments. Referring to FIG. 6, along the radial direction of the electrode assembly 120, the electrode assembly 12 includes a first region Ra away from the center hole 120c, and a second region Rb closer to the center hole 120c compared to the first region Ra. The negative electrode active material layer 16 has a first end 16u along the first direction D1. A surface 202s of the positive electrode current collecting plate 202 faces the electrode assembly 120. A minimum distance between a surface 202s of the positive electrode current collecting plate 202 and the first end 16u of the negative electrode active material layer 16 along the first direction D1 is L mm. According to the embodiments of the present disclosure, the distance L mm is subject to different requirements with respect to different regions of the electrode assembly 120.

Specifically, within a projection range of the first region Ra along the first direction D1, a minimum distance between the surface 202s of the positive electrode current collecting plate 202 and the first end 16u of the negative electrode active material layer 16 along the first direction D1 is L_{A} mm, L_{A} mm ≥ 1.5 mm. Because the first region Ra is close to the side surface of the housing, under operating conditions such as installation of the battery into the vehicle, the probability of lateral compression is high. Accordingly, the minimum distance L_{A} mm has the greatest impact at such times. By setting a lower limit of L_{A} mm to 1.5 mm, compression of the housing that could result in battery failure may be avoided, thereby enhancing the safety performance of the battery during use and, consequently, increasing the pass rate of the shoulder dynamic compression test.

In some embodiments, a value range of L_{A} mm is 6 mm ≥ L_{A} mm ≥ 1.5 mm. By setting an upper limit of the value range of L_{A} mm to 6 mm, it is possible to avoid the distance between the surface 202s of the positive electrode current collecting plate 202 and the first end 16u of the negative electrode active material layer 16 occupying an excessive height space of the battery, thereby improving the energy density of the battery.

In some embodiments, a maximum height of the secondary battery is H mm. A value of H mm may be, for example, 80 mm (corresponding to 4680 columnar battery), 95 mm (corresponding to 4695 columnar battery), 120 mm (corresponding to 46120 columnar battery), and 150 mm (corresponding to 46150 columnar battery). In some embodiments, a value range of H/L_{A} is 13-100. Based on the maximum height H mm and setting the value range of the ratio H/L_{A}, for secondary batteries of different heights, it is possible to avoid L_{A} mm being too large or too small, thereby improving safety performance and improving the energy density of the battery for secondary batteries of different heights.

In some embodiments, within a projection range of the second region Rb along the first direction D1, the minimum distance between the surface 202s of the positive electrode current collecting plate 202 and the first end 16u of the negative electrode active material layer 16 along the first direction D1 is L_{B} mm, 6 mm ≥ L_{B} mm ≥ 1.34 mm. On the basis of satisfying L_{A}, by further controlling the upper limit of L_{A} mm to be not less than 1.34 mm, the risk of short circuit of the battery under extreme deformation may be reduced. Controlling L_{A} mm to be not greater than 6 mm may improve the energy density of the battery. Preferably, the above value requirements of L_{A} mm and L_{B} mm need to be satisfied simultaneously. If L_{A} mm and L_{B} mm simultaneously do not satisfy the above value requirements, the failure probability of the shoulder dynamic compression test is >50%; if L_{A} mm does not satisfy the above value requirements, the failure probability of the shoulder dynamic compression test is >20%.

In some embodiments, along the radial direction of the electrode assembly 120, the electrode assembly 120 further includes a third region Rc, and the third region Rc is closer to the center hole 120c than the second region Rb. In some embodiments, the electrode assembly 120 may be evenly divided along its radial direction into the first region Ra, the second region Rb, and the third region Rc.

Within a projection range of the third region Rc along the first direction D1, the minimum distance between the surface 202s of the positive electrode current collecting plate 202 and the first end 16u of the negative electrode active material layer 16 along the first direction D1 is L_{C} mm, 6 mm ≥ L_{C} mm ≥ 1.1 mm. By controlling the lower limit of L_{C} mm, it may be easier to satisfy the control of L_{A} mm and L_{B} mm in the manufacturing process. Controlling L_{C} mm to be not greater than 6 mm may improve the energy density of the battery.

In some embodiments, when only a first region Ra and a second region Rb exist, along the radial direction of the electrode assembly 120, the first region Ra is defined as the region from the 1/2 position of the radius of the electrode assembly 120 to the outer side of the electrode assembly 120, and the second region Rb is defined as the region from the center hole of the electrode assembly 120 to the 1/2 position of the radius of the electrode assembly 120.

In some embodiments, when a first region Ra , a second region Rb, and a third region Rc are included, along the radial direction of the electrode assembly 120, the first region Ra is defined as the region from the 2/3 position of the radius of the electrode assembly 120 to the outer side of the electrode assembly 120, the third region Rc is defined as the region from the center hole of the electrode assembly 120 to the 1/3 position of the radius of the electrode assembly 120, and the second region Rb is located between the third region Rc and the first region Ra.

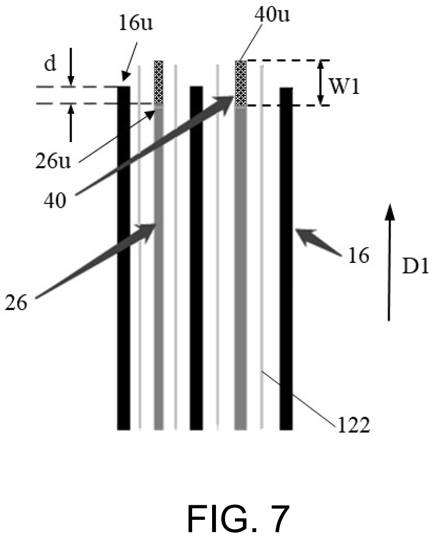

FIG. 7 shows an enlarged cross-sectional view of a portion of the electrode assembly. Referring to FIG. 6 and FIG. 7, the width of the insulating layer 40 in the first direction is W1 mm. In some embodiments, a value range of W1 mm is 1.9 mm to 2.7 mm, i.e., 2.7 mm ≥ W1 mm > 1.9 mm. Referring to FIG. 7, the insulating layer 40 includes a first end 40u in the first direction D1. By controlling a lower limit of the width W1 mm of the insulating layer 40 to be greater than 1.9 mm, a distance from the first end 26u of the positive electrode active material layer 26 of the positive electrode sheet to the first end 40u of the insulating layer 40 may be improved. A distance by which the first end 16u of the negative electrode active material layer 16 exceeds the first end 26u of the positive electrode active material layer 26 along the first direction D1 is d mm. A distance by which the first end 40u of the insulating layer 40 exceeds the first end 16u along the first direction D1 is W1 mm to d mm. By controlling the lower limit of the width W1 mm of the insulating layer 40 to be greater than 1.9mm, it may be ensured that the distance by which the first end 40u exceeds the first end 16u is not too small. In some existing secondary batteries, the width of the insulating layer 40 is typically 1.3 mm to 2.7 mm. According to the embodiments of the present disclosure, by controlling the lower limit of the width W1 mm of the insulating layer 40 to be greater than 1.9 mm, the insulating layer 40 may provide some support in the event of battery failure, thereby avoiding ignition of the battery.

In some embodiments, the distance d mm is typically 1 mm. In such embodiments, the distance by which the first end 16u of the negative electrode active material layer 16 exceeds the first end 40u of the insulating layer 40 may be not less than 0.9 mm. Because there is the insulating layer 40 exceeding the first end 16u by not less than 0.9 mm, the insulating layer 40 may provide some support in the event of battery failure, thereby avoiding ignition of the battery.

Further, in some embodiments, the width W1 mm of the insulating layer 40 is greater than 2mm, i.e., 2.7mm≥W1 mm≥2mm. By further strictly controlling the lower limit value of the width W1 mm, it is possible to further provide some support for the insulating layer in the event of battery failure, thereby avoiding ignition of the battery.

In summary, the present disclosure addresses differing regional requirements for the distance L mm by partitioning the electrode assembly and, on a region-by-region basis, controlling the corresponding distances L_{A} mm, L_{B} mm, and L_{C} mm, and, in combination with the width W1 mm of the insulating layer, imposing joint constraints, thereby preventing battery failure due to compression and improving safety performance during battery operation.

## Claims

1. A secondary battery (100), comprising:
a housing (200), comprising an end wall (111) and a side wall (109) surrounding the end wall (111), wherein the end wall (111) has an opening portion (111V);
an electrode assembly (120), accommodated inside the housing (200), comprising a negative electrode sheet (10), a positive electrode sheet (20) and a separator (122) provided between the negative electrode sheet (10) and the positive electrode sheet (20), wherein the negative electrode sheet (10) comprises a negative electrode current collector (18) and a negative electrode active material layer (16) coated on a part of a surface of the negative electrode current collector (18), the negative electrode current collector (18) comprises a negative electrode coated region (18a) covered by the negative electrode active material layer (16) and a negative electrode uncoated region (18b) not covered by the negative electrode active material layer (16), a direction from the negative electrode uncoated region (18b) to the negative electrode coated region (18a) is a preset direction (D1);
an electrode terminal (160), passing through the opening portion (111V) and fixed on the end wall (111), and insulated from the end wall (111); and
a current collecting plate (202), provided between the electrode assembly (120) and the end wall (111), and electrically connecting the electrode assembly (120) and the electrode terminal (160);
wherein
along a radial direction of the electrode assembly (120), the electrode assembly (120) comprising a first region (Ra) away from a center hole (120c) of the electrode assembly (120) and a second region (Rb) close to the center hole (120c), wherein the negative electrode active material layer (16) has a first end (16u) along the preset direction (D1),
within a projection range of the first region (Ra) along the preset direction (D1), a surface (202s) of the current collecting plate (202) faces the electrode assembly (120), a minimum distance between the surface (202s) of the current collecting plate (202) and the first end (16u) along the preset direction (D1) is L_{A} mm, L_{A} mm ≥ 1.5 mm.

2. The secondary battery (100) according to claim 1, wherein
6 mm ≥ L_{A} mm ≥ 1.5 mm;
a maximum height of the secondary battery (100) is H mm, a value range of H/L_{A} is 13-100;
within a projection range of the second region (Rb) along the preset direction (D1), a minimum distance between the surface (202s) of the current collecting plate (202) and the first end (16u) along the preset direction (D1) is L_{B} mm, 6 mm ≥ L_{B} mm ≥ 1.34 mm.

3. The secondary battery (100) according to claim 1, wherein
along the radial direction of the electrode assembly (120), the electrode assembly (120) further comprises a third region (Rc), the third region (Rc) is closer to the center hole (120c) compared to the second region (Rb),
within a projection range of the third region (Rc) along the preset direction (D1), a minimum distance between the surface (202s) of the current collecting plate (202) and the first end (16u) along the preset direction (D1) is L_{C} mm, 6 mm ≥ L_{C} mm ≥ 1.1 mm.

4. The secondary battery (100) according to any one of claims 1-3, wherein
the positive electrode sheet (20) comprises a positive electrode current collector (28) and a positive electrode active material layer (26), the positive electrode current collector (28) comprises a positive electrode coated region (28a) covered by the positive electrode active material layer (26), and a positive electrode uncoated region (28b) not covered by the positive electrode active material layer (26), a direction from the positive electrode coated region (28a) to the positive electrode uncoated region (28b) is the preset direction (D1);
along the preset direction (D1), the positive electrode uncoated region (28b) comprises a positive electrode tab (28b2), and a positive electrode connection region (28b1) connected between the positive electrode tab (28b2) and the positive electrode coated region (28a),
the electrode assembly (120) further comprises an insulating layer (40), the insulating layer (40) covers the positive electrode connection region (28b1), a value range of a width (W1) of the insulating layer (40) in the preset direction (D1) is 1.9 mm to 2.7 mm.

5. The secondary battery (100) according to claim 4, wherein
the width (W1) of the insulating layer (40) in the preset direction (D1) is greater than 2 mm.

6. The secondary battery (100) according to claim 4, wherein
the insulating layer (40) comprises a first end (40u) in the preset direction (D1), wherein a distance that the first end (16u) of the negative electrode active material layer (16) exceeds the first end (40u) of the insulating layer (40) in the preset direction (D1) is greater than 0.9 mm.

7. The secondary battery (100) according to claim 1, wherein
a side of the electrode terminal (160) facing away from the electrode assembly (120) has a hole (117) recessed toward the electrode assembly (120);
the secondary battery (100) further comprises a sealing nail (211), and the sealing nail (211) seals the hole (117).

8. The secondary battery (100) according to claim 7, further comprising:
a cover plate (220), sealing the opening portion (111V) to encapsulate the electrode assembly (120) inside the housing (200);
wherein the hole (117) is provided as a blind hole, the cover plate (220) is provided with an injection hole passing through the cover plate (220),
a bottom surface of the blind hole (117) has a weld mark (280) formed by welding the electrode terminal (160) and the current collecting plate (202).

9. A battery pack (1002), comprising:
the secondary battery (100) according to any one of claims 1-8.

10. An electronic device (1000), comprising:
the battery pack (1002) according to claim 9.
